# EUROPÄISCHE PATENTSCHRIFT

(11) **EP 0 924 457 B1**
(45) Veröffentlichungstag und Bekanntmachung des Hinweises auf die Patenterteilung: **18.10.2006**
(21) Anmeldenummer: 98123661.5
(22) Anmeldetag: 11.12.1998
(51) Int. Cl.: F23C 1/00, F23G 5/46

(54) **Anlage zur Verbrennung von fossilem Brennstoff und Biostoff oder Abfall**
Plant for the combustion of fossil fuel and biomass or waste
Installation pour la combustion de combustible fossile et biomasse ou déchets

(30) Priorität: 16.12.1997 DE 19755907
(43) Veröffentlichungstag der Anmeldung: 23.06.1999
(73) Patentinhaber: ALSTOM Power Boiler GmbH, 70329 Stuttgart (DE)
(72) Erfinder: Elsner, Birgit, 70736 Fellbach (DE); Brüggemann, Hellmut, 73760 Ostfildern (DE); Krogmann, Uwe, 74385 Pleidelsheim (DE); Marling, Tino-Martin, 70794 Filderstadt (DE); Schroth, Gerhard, 70327 Stuttgart (DE); Vogt, Walter, 71254 Ditzingen (DE)

(56) Entgegenhaltungen:
- WO-A-97/14001
- DE-A- 1 915 852
- DE-A- 1 936 038
- DE-A- 3 330 122
- US-A- 2 090 328
- US-A- 3 884 193
- PATENT ABSTRACTS OF JAPAN vol. 005, no. 087 (M-072), 6. Juni 1981 (1981-06-06) & JP 56 034013 A (BABCOCK HITACHI KK), 6. April 1981 (1981-04-06)

## Beschreibung

Die Erfindung betrifft eine Anlage zur Verbrennung von fossilem Brennstoff und Biostoff oder Abfall, bei der der fossile Brennstoff in einer Großkesselanlage eines Kraftwerkes und der Biostoff oder Abfall in einer als Vorfeuerung zur Großkesselanlage ausgebildeten Zusatzverbrennungseinrichtung verbrannt und in der Zusatzverbrennungseinrichtung anfallendes Rauchgas in die Großkesselanlage eingeleitet wird.

Neben Abfall, der organische und anorganische Abfallstoffe enthalten kann, können auch nur organische Abfallstoffe bzw. Biostoffe (u. a. auch als Biomasse bezeichnet), wie Holzabfälle aller Art, Bagasse, Erdnuß- und andere -Schalen oder nachwachsende Biostoffe wie Schilf, Stroh, Gestrüpp u. a. in derartigen Vorfeuerungen verbrannt werden. Durch das Verbrennen von derartigen Biostoffen in Vorfeuerungen von mit fossilem Brennstoff betriebenen Großkesselanlagen können einerseits durch den Biostoff fossiler Brennstoff substituiert werden und dabei der CO₂-Ausstoß verringert werden und andererseits wertvoller Deponieraum eingespart werden.

Aus der DE 44 42 136 A1 ist ein Verfahren bekannt, bei dem eine zur Verbrennung von fossilem Brennstoff und mit einem Wasser-/Dampfkreislauf zur Wärmeauskopplung ausgebildete Großkesselanlage eines Kraftwerkes und bei dem eine zur Verbrennung von Abfall in einer als Vorfeuerung zur Großkesselanlage ausgebildeten Zusatzverbrennungseinrichtung vorgesehen ist, wobei das in der Zusatzverbrennungseinrichtung anfallende Rauchgas in die Großkesselanlage eingeleitet wird. Als Zusatzverbrennungseinrichtung ist dabei eine Rostfeuerung eingesetzt, wobei das die Großkesselanlage verlassende Rauchgas zu maximal 30 % aus der Rostfeuerung bzw. Vorfeuerung und zu minimal 70 % aus der Verbrennung des fossilen Brennstoffs stammt. Durch das bekannte Verfahren ist es möglich, anfallenden Abfall nahezu unaufbereitet zu verwenden. Bei dem bekannten Verfahren wird sichergestellt, dass für das insgesamt anfallende Rauchgas aus der Verbrennung von Abfall und fossilem Brennstoff die für das Rauchgas von Kraftwerken geltenden gesetzlichen Bestimmungen eingehalten werden. Dies gilt insbesondere der Einhaltung von HCl- und CO-Grenzwerten und dem Ausbrand evtl. weiterer Pyrolyseprodukte.

Aus der DE 43 12 900 A 1 ist ein Verfahren und eine Anordnung zum Betrieb einer Vorfeuerung mit Biostoff-Verbrennung für einen kohlenstaubgefeuerten Dampfkessel bekannt, bei dem bzw. der die Biostoffe der Vorfeuerung aufgegeben und verbrannt werden sowie die erzeugten Heißgase in die Brennkammer des Dampfkessels gefördert werden, wobei die Vorfeuerung direkt mit dem Heißluft-, Zündbrenner-, Mahlanlagen-, Hauptbrenner-, Brennkammer-, Heizflächen-, Rauchgas- und Entaschungssystem sowie mit der Sicherheits- und Notschaltung des Dampfkessels gefahren wird. Es ist ferner bekannt geworden, dass in der Vorfeuerung Heizflächen angeordnet sein können, die in das Heizflächensystem des Dampfkessels oder in ein Wärmeabnahmesystem eingebunden sind.

Durch die Druckschrift WO 97/14001 ist ein Verfahren und eine Anlage zur Abfallbehandlung bekannt geworden. Diese Anlage umfasst eine zur Verfeuerung von fossilen Brennstoffen geeignete Hauptverbrennungskammer, die mit Mitteln zum Erzeugen von Dampf ausgebildet ist. Ferner umfasst diese Anlage mindestens eine zur Verfeuerung von kohlenstoffhaltigen Materialien wie Holz etc. geeignete Zusatzbrennkammer bzw. Sekundärbrennkammer, wobei das in der Zusatzbrennkammer bei der Verbrennung des kohlenstoffhaltigen Materials entstehende Rauchgas durch einen Führungskanal von der Zusatzbrennkammer in die Hauptbrennkammer geführt wird. Die Zusatzbrennkammer kann mit einer Wärmetauschereinrichtung ausgebildet sein, die im Wasser-/Dampf-Kreislauf der mit Dampferzeugungsmitteln ausgebildeten Hauptverbrennungskammer eingebunden sein kann. Die Zusatzbrennkammer ist mit einer Wirbelschichtfeuerung ausgebildet und besitzt hierfür einen obligatorischen Düsenboden, der aus speziell ausgerichteten Düsenblättern besteht und das oberhalb des Düsenbodens in Suspension befindliche Verbrennungsbett mittels den durch den Düsenboden durchgeleiteten Luftstrom in eine toroidale Bewegung versetzt.

Für den Betrieb einer Anlage zur Verbrennung von fossilem Brennstoff und Biostoff oder Abfall, bei der der fossile Brennstoff in einer Großkesselanlage eines Kraftwerkes und der Biostoff oder Abfall in einer als Vorfeuerung zur Großkesselanlage ausgebildeten Zusatzverbrennungseinrichtung verbrannt und in der Zusatzverbrennungseinrichtung anfallendes Rauchgas in die Großkesselanlage eingeleitet wird, müssen jedoch erhebliche Aufwendungen betrieben werden, um einen optimalen Wirkungsgrad der Anlage, geringstmögliche Betriebskosten zur Bereitstellung des "Brennstoffes" Biostoff oder Abfall sowie geringstmögliche Investitionskosten bezüglich der Anlage und einen geringeren Raumbedarf der Anlage zu erzielen.

Alle bisher bekannten Maßnahmen stellen jeweils nur eine Teillösung eines Einzelproblems dar und ergeben keine komplexe Lösung für den Betrieb einer Anlage zur Verbrennung von fossilem Brennstoff in einer Großkesselanlage und Abfall oder Biostoff in einer Zusatzverbrennungseinrichtung zur Großkesselanlage, wie oben geschildert.

Der Erfindung liegt die Aufgabe zugrunde, eine Anlage zur Verbrennung von fossilem Brennstoff und Biostoff oder Abfall, bei der der fossile Brennstoff in einer Großkesselanlage eines Kraftwerkes und der Biostoff oder Abfall in einer als Vorfeuerung zur Großkesselanlage ausgebildeten Zusatzverbrennungseinrichtung verbrannt und in der Zusatzverbrennungseinrichtung anfallendes Rauchgas in die Großkesselanlage eingeleitet wird, vorzuschlagen, bei der geringstmögliche Betriebskosten zur Bereitstellung des Brennstoffes Biostoff oder Abfall sowie geringstmögliche Investitionskosten bezüglich der Anlage anfallen und die Gewährleistung eines sicheren Betriebes sowie ein optimaler Wirkungsgrad weitestgehend erfüllt sind.

Diese Aufgabe wird durch das kennzeichnende Merkmal des Patentanspruchs 1 gelöst.

Die Unteransprüche gestalten die Erfindung vorteilhaft aus.

Durch die erfindungsgemäße Lösung ergeben sich die folgenden Vorteile:
1. Durch Verwendung eines Feuerungsrostes in der Zusatzverbrennungseinrichtung gegenüber einer Verbrennung in Suspension (Wirbelschichtfeuerung u. a.) wird es ermöglicht, Biostoffe oder Abfall nahezu unaufbereitet in der Zusatzverbrennungseinrichtung verbrennen zu können. Durch diese Maßnahme werden Investitions- und Betriebskosten wesentlich herabgesetzt (50 % und mehr).
2. Optimale Wärmeausnutzung der Brennstoffwärme bei der Biostoff- bzw. Abfallverbrennung.

In bevorzugter Weise wird die Wärmetauscheinrichtung in der Zusatzverbrennungseinrichtung gemäß der erfindungsgemäßen Anlage als Speisewasservorwärmer bzw. als zusätzlicher Speisewasservorwärmer im Wasser-/Dampfkreislauf der Großkesselanlage ausgebildet. Als zusätzlicher Speisewasservorwärmer (auch ECO genannt) wird die Wörmetauscheinrichtung dann vorgesehen, wenn im Wasser-/Dampfkreislauf der Großkesselanlage bereits ein ECO vorhanden ist. Falls dies nicht der Fall ist, kann die Wärmetauscheinrichtung die Funktion des ECO übernehmen. Diese bevorzugte Anordnung ist insbesondere für Großkesselanlagen geeignet, die als Durchlaufkessel konzipiert sind.

Die Wärmetauscheinrichtung der Zusatzverbrennungseinrichtung kann stromaufwärts oder stromabwärts des ECO's der Großkesselanlage im Wasser-/Dampfkreislauf der Großkesselanlage angeordnet sein.

In weiterer bevorzugter Weise wird die Wärmetauscheinrichtung in der Zusatzverbrennungseinrichtung als Verdampfer ausgebildet, der im Wasser-/Dampfkreislauf der Großkesselanlage parallel zum Verdampfer der Großkesselanlage angeordnet ist. Diese bevorzugte Anordnung ist insbesondere für Großkesselanlagen geeignet, die als Naturumlaufkessel konzipiert sind.

Die Erfindung wird anhand der nachfolgenden Beschreibung und der Zeichnung näher erläutert.

Es zeigen
- Fig. 1: eine stark vereinfachte, schematische Darstellung einer Großkesselanlage eines Kraftwerkes mit vorgeschalteter Zusatzverbrennungseinrichtung;
- Fig. 2: einen schematisch dargestellten Teilabschnitt des Wasser-/Dampfkreislaufes.
- Fig. 3: einen schematisch dargestellten Teilabschnitt des Wasser-/Dampfkreislaufes entsprechend einer alternativen erfindungsgemäßen Lösung.

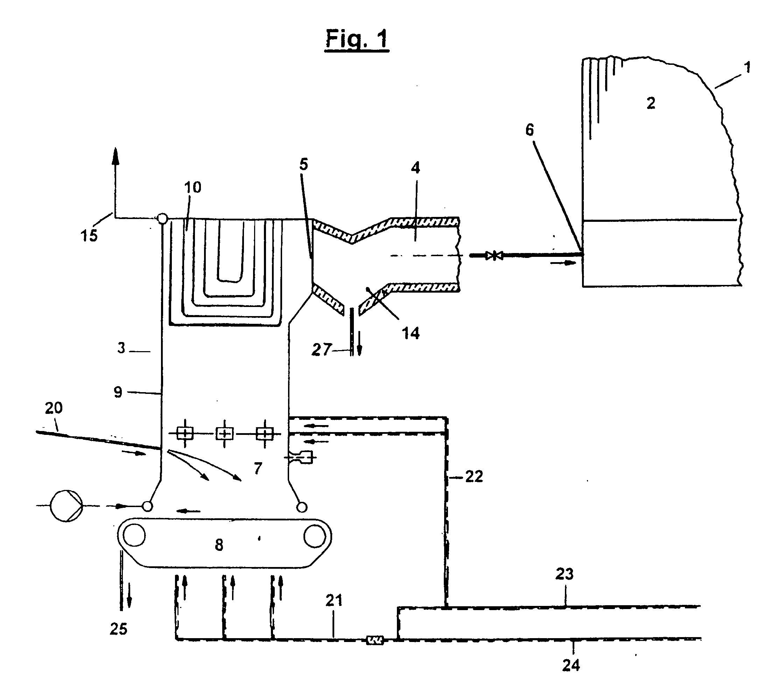

Fig. 1 zeigt (in schematischer Darstellung) eine Großkesselanlage 1 eines Kraftwerkes zur Verfeuerung eines fossilen Brennstoffes in bekannter Weise. Im dargelegten Beispiel wird Kohle mittels nicht dargestellter Kohlenstaubbrenner in der Brennkammer 2 der Großkesselanlage 1 verbrannt und die freiwerdende Wärmeenergie über nicht dargestellte Verdampfer- und Überhitzerheizflächen dem Wasser-/Dampfkreislauf 15 der Großkesselanlage 1 zugeführt und energetisch durch Zuführung in eine nicht dargestellte Dampfturbine verwertet.

Die bei der Verbrennung der Kohle entstehenden Verbrennungsabgase werden in den der Großkesselanlage 1 nachgeschalteten und nicht näher bezeichneten Rauchgasreinigungsanlagen in bekannter Weise gemäß der Auflagen bzw. Emissionsvorschriften gereinigt. Der Großkesselanlage 1 ist eine Zusatzverbrennungseinrichtung 3 vorgeschaltet und mit dieser durch den Verbindungskanal 4 verbunden. Anstelle einer Zusatzverbrennungseinrichtung 3 können auch mehrere jeweils mit der Großkesselanlage 1 verbundene Zusatzverbrennungseinrichtungen 3 vorgesehen werden.

In der Zusatzverbrennungseinrichtung 3 wird Biostoff durch die Brennstoffaufgabe 20 einem Rost 8 aufgegeben und im Beisein einer Primär- und Sekundärverbrennungsluft 21, 22 in der Brennkammer 7 verbrannt. Die bei der Verbrennung des Biostoffes anfallende Schlacke wird durch den Schlackenaustritt 25 entsorgt. Die Brennstoffaufgabe 20 kann dabei mechanisch mittels bekannter Wurfeinrichtungen oder pneumatisch erfolgen.

Durch die erfindungsgemäße Verbrennung des Biostoffes oder Abfalls auf dem Rost 8 und somit des Einsatzes einer Rostfeuerung kann vorteilhafterweise der Biostoff bzw. die Biomasse oder der Abfall in grobstückiger Weise der Feuerung aufgegeben werden, eine spezielle Zerkleinerung durch Zerkleinerungsmaschinen kann weitgehend entfallen. Als Rost 8 können an sich bekannte Einrichtungen, wie beispielsweise Wanderroste, Vorschubroste u. a., eingesetzt werden.

Die im wesentlichen vertikale und in der Regel mit rechteckigem Querschnitt ausgeführte Brennkammer 7 der Zusatzverbrennungseinrichtung 3 ist ferner mit einer Wärmetauscheinrichtung 9,10 ausgebildet. Diese Wärmetauscheinrichtungen können Umfassungsrohrwände 9, die als Heizflächen ausgebildet sind und die Brennkammer 7 begrenzen, und/oder Konvektiv-Wörmetauscheinrichtungen bzw. Schott-Heizflächen 10 sein, die im oberen Bereich der Brennkammer 7 angeordnet sind. Die Zusatzverbrennungseinrichtung 3 gemäß Fig. 1 ist beispielhaft mit Umfassungsrohrwänden 9 und Schott-Heizflächen 10 ausgebildet. Die Wärmetauscheinrichtung, gemäß Figur 1 beinhaltend die Umfassungsrohrwände 9 und die der Schott-Heizflächen 10, sind in den Wasser-/Dampfkreislauf 15 der Großkesselanlage 1 eines Kraftwerkes, d. h. in einen Dampfturbinenkraftwerksprozeß, eingebunden. Die Umfassungsrohrwände 9 sind bevorzugt gasdicht ausgebildet.

Der Wasser-/Dampfkreislauf 15 der Großkesselanlage 1 nimmt gemäß Fig. 1 dabei durch die Heizflächen der Umfassungsrohrwände 9 und der Schott-Heizflächen 10 einen Teil der bei der Verbrennung von Biostoff in der Brennkammer 7 der Zusatzverbrennungseinrichtung 3 freiwerdenden Wärme auf, wobei die Wärme als Strahlungs- und/oder Berührungswärme abgegeben wird. Anschließend verlässt das bereits einen Teil seiner Wärme entzogene Rauchgas bzw. Verbrennungsabgas durch den Rauchgasaustritt 5 die Zusatzverbrennungseinrichtung 3 und gelangt durch den Verbindungskanal 4 und durch den Eintritt 6 in die Brennkammer 2 der Großkesselanlage 1, in der es in den Verbrennungsprozess der Großkesselanlage 1 mit einbezogen wird. Das Rauchgas kann dabei durch eine oder mehrere Eintrittsöffnungen in die Brennkammer 2 oder in den nicht dargestellten Trichterbereich der Brennkammer 2 eingeleitet werden, in dem für eine unproblematische Rauchgaseinleitung ausreichender Unterdruck vorherrscht. Anstatt des in Fig. 1 dargestellten einen Verbindungskanals 4 und einen Austritts 5 können auch mehrere, vorzugsweise zwei, Austritte 5 und Verbindungskanäle 4 angeordnet werden. Entsprechend mehrere Eintritte 6 sind dann vorgesehen.

Durch die Maßnahme, dass ein Teil der entbundenen Wärme (mind. 90 %) in der Brennkammer 7 an die Heizflächen 9, 10 abgegeben wird, kann das entsprechende Wärmeäquivalent an fossilem Brennstoff eingespart werden.

Im dargelegten Beispiel substituiert der eingesetzte Biostoff ca. 10 % des Brennstoffes, der in der Großkesselanlage 1 verfeuert wird, bzw. ersetzt ca. 100 MWₜₕ. Diese Werte sind bedarfsweise auslegbar.

Ferner führt die vorgenannte Maßnahme zu einem geringeren Rauchgasvolumen und daraus herleitend zu geringeren Abmessungen des Verbindungskanals 4 bzw. der Verbindungskanäle 4.

Der Verbindungskanal 4 ist in bekannter Weise innen mit einer geeigneten temperatur- und erosionsfesten Auskleidung und außen mit geeigneter Isolierung versehen.

Das durch Austritt 5 die Zusatzverbrennungseinrichtung 3 verlassende Rauchgas kann durch einen Zyklonabscheider 14 von Flugasche und gegebenenfalls Unverbranntem gereinigt werden, bevor es durch den Verbindungskanal 4 und durch den Eintritt 6 in die Brennkammer 2 der Großkesselanlage 1 gelangt.

Die im Zyklonabscheider 14 abgetrennte Flugasche und gegebenenfalls Unverbranntes kann ferner durch den Feststoffaustritt 27 und eine nicht dargestellte Leitung in die Brennkammer 7 oder auf den Rost 8 der Zusatzverbrennungseinrichtung 3 aufgegeben werden. Die für die Verbrennung des Biostoffes erforderliche Verbrennungsluft 23 kann aus der für die Verbrennung des fossilen Brennstoffes in der Großkesselanlage 1 bereitgestellten und vorgewärmten Verbrennungsluft strömungsmittelseitig hinter dem Luftvorwärmer (nicht dargestellt) entnommen werden. Entsprechend den Anforderungen kann der Zusatzverbrennungseinrichtung 3 Verbrennungsluft als Primär-, Sekundär-, ggf. Tertiär- sowie Ausbrandluft zugeführt werden.

Ferner kann der vorgewärmten Verbrennungsluft 23 Kaltgas 24, das rauchgasseitig stromabwärts des nicht dargestellten Luftvorwärmers aus dem nicht dargestellten Abgaskanal der Großkesselanlage 1 entnommen wird, zugemischt werden.

Die Absaugung des Rauchgases aus der Brennkammer 7 in die Brennkammer 2 erfolgt durch den im unteren Bereich der Brennkammer 2 vorhandenen Unterdruck. Bei Überdruckfeuerungen (z. B. öl- und gasgefeuerte Kessel, Abhitzekessel usw.) in der Brennkammer 2 muss die Verbrennungsluft 23 sowie das ggf. zugemischte Kaltgas 24 durch ein eigenes, nicht dargestelltes und mit einem gegenüber der Brennkammer 2 höheren Druck aufweisendes Gebläse in die Brennkammer 7 aufgegeben werden.

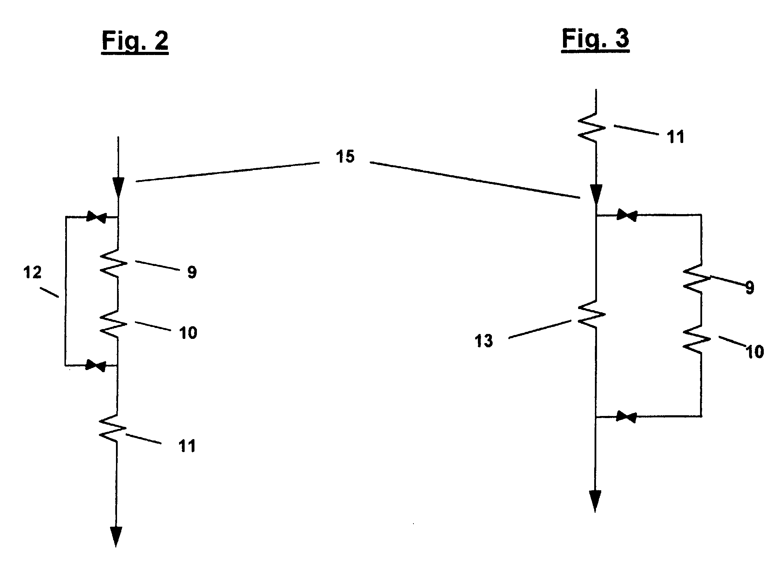

Fig. 2 und Fig. 3 zeigen schematisch dargestellt die Einbindung der Wärmetauscheinrichtung 9, 10 der Zusatzverbrennungseinrichtung 3 in den Wasser-/Dampfkreislauf 15 der Großkesselanlage 1.

Fig. 2 zeigt schematisch einen Teilabschnitt des vorgenannten Wasser-/Dampfkreislaufes 15. Das Arbeitsmedium Wasser/Dampf durchströmt die Heizflächen der Umfassungsrohrwände 9 und anschließend die Schott-Heizflächen 10 und nimmt einen Teil der bei der Verbrennung des Biostoffes in der Zusatzverbrennungseinrichtung 3 freiwerdenden Wärme auf. Dabei werden die Wärmetauscheinrichtungen 9, 10 in bevorzugter Weise als Speisewasservorwärmer bzw. als zusätzliche Speisewasservorwärmeinrichtung im Wasser-/Dampfkreislauf 15 eingesetzt. Besitzt der Wasser-/Dampfkreislauf 15 der Großkesselanlage 1 bereits einen ECO 11, dann werden die Wärmetauscheinrichtungen 9, 10 als zusätzliche Speisewasservorwärmeinrichtung benutzt. Diese bevorzugte Anordnung ist insbesondere für Großkesselanlagen 1 geeignet, die als Durchlaufdampferzeuger konzipiert sind.

Die Wärmetauscheinrichtungen 9, 10 der Zusatzverbrennungseinrichtung 3 kann, wie in Fig. 2 gezeigt, stromaufwärts oder auch stromabwärts des ECO's 11 im Wasser-/Dampfkreislauf 15 der Großkesselanlage 1 liegen.

Das Arbeitsmedium gelangt nach der Wärmeeinkopplung über die Wärmetauscheinrichtungen 9, 10 in die weiteren üblicherweise folgenden, nicht aufgeführten Wärmetauscheinrichtungen des Wasser-/Dampfkreislaufes 15 der Großkesselanlage 1. Die Anzahl der Schott-Heizflächen 10 kann je nach Bedarf gewählt werden.

In den Fällen, dass die Zusatzverbrennungseinrichtung 3 nicht in Betrieb ist, kann das Arbeitsmedium im Wasser-/Dampfkreislauf 15 durch die Bypassleitung 12 an den Wärmetauscheinrichtungen 9, 10 vorbeigeleitet werden.

Die Wärmetauscheinrichtungen 9, 10 können in weiterer bevorzugter Weise als Verdampfer ausgebildet sein, der im Wasser-/Dampfkreislauf 15 parallel zum Verdampfer 13 der Großkesselanlage 1 angeordnet ist; siehe Fig. 3. Diese bevorzugte Anordnung ist insbesondere für Großkesselanlagen 1 geeignet, die als Naturumlaufdampferzeuger konzipiert sind.

Die vorgenannt aufgezeigten wasser-/dampfseitigen Schaltungen der Wärmetauscheinrichtungen 9, 10 der Zusatzverbrennungseinrichtung 3 mit der Großkesselanlage 1 gem. Fig. 2 und 3 ermöglichen das Optimum der Wärmenutzung bei der Verbrennung von Biostoff in einer derartigen Anlage.

### Legende

- 1: Großkesselanlage (Großdampferzeuger)
- 2: Brennkammer
- 3: Zusatzverbrennungseinrichtung
- 4: Verbindungskanal
- 5: Rauchgasaustritt der Zusatzverbrennungseinrichtung
- 6: Rauchgaseintritt der Großkesselanlage
- 7: Brennkammer
- 8: Rost
- 9: Umfassungs-Heizflächenwände (Wärmetauscheinrichtung)
- 10: Schott-Heizfläche (Konvektiv-Heizfläche)
- 11: Economiser
- 12: Bypassleitung
- 13: Verdampfer
- 14: Zyklonabscheider
- 15: Wasser-/Dampfkreislauf der Großkesselanlage (Dampfturbinenkraftwerksprozeß)
- 16:
- 17:
- 18:
- 19:
- 20: Brennstoffaufgabe
- 21: Primärluft
- 22: Sekundärluft
- 23: Verbrennungsluft
- 24: Kaltgas
- 25: Schlackeaustritt
- 26:
- 27: Feststoffaustritt
- 28:

## Patentansprüche

1. Anlage zur Verbrennung von fossilem Brennstoff und Biostoff oder Abfall, umfassend
eine Großkesselanlage (1) eines mit einer Dampfturbine betriebenen Kraftwerkes mit Einrichtungen zum Verbrennen von fossilem Brennstoff,
mindestens eine der Großkesselanlage (1) vorgeschaltete Zusatzverbrennungseinrichtung (3) zum Verbrennen von Biostoff oder Abfall,
mindestens einen Verbindungskanal (4), der die Brennkammer (7) der Zusatzverbrennungseinrichtung (3) mit der Brennkammer (2) der Großkesselanlage (1) verbindet
und mindestens eine in der Zusatzverbrennungseinrichtung (3) angeordnete Wärmetauscheinrichtung (9,10), wobei die Wärmetauscheinrichtung (9,10) in den Wasser-/Dampfkreislauf (15) der Großkesselanlage (1) eingebunden ist,
**dadurch gekennzeichnet, dass** die Zusatzverbrennungseinrichtung (3) mit einer Rostfeuerung (8), die mit einem mechanisch bewegbaren Rost, nämlich Vorschub-, Rückschub-, Wander-, Walzenrost oder dgl. ausgerüstet ist, ausgebildet ist.

2. Anlage nach Anspruch 1, **dadurch gekennzeichnet, dass** die Wärmetauscheinrichtung (9,10) als Speisewasservorwärmer bzw. als zusätzlicher Speisewasservorwärmer im Wasser-/Dampfkreislauf (15) der Großkesselanlage (1) ausgebildet ist.

3. Anlage nach Anspruch 1 oder 2, **dadurch gekennzeichnet, dass** die Wärmetauscheinrichtung (9,10) stromaufwärts eines in den Wasser-/Dampfkreislauf (15) der Großkesselanlage (1) eingebundenen Speisewasservorwärmers (11) angeordnet ist.

4. Anlage nach Anspruch 1 oder 2, **dadurch gekennzeichnet, dass** die Wärmetauscheinrichtung (9,10) stromabwärts eines in den Wasser-/Dampfkreislauf (15) der Großkesselanlage (1) eingebundenen Speisewasservorwärmers (11) angeordnet ist.

5. Anlage nach einem der vorgenannten Ansprüche, **dadurch gekennzeichnet, dass** der Wasser-/Dampfkreislauf (15) mit einer die Wärmetauscheinrichtung (9,10) umgehenden Bypassleitung (12) ausgebildet ist.

6. Anlage nach Anspruch 1, **dadurch gekennzeichnet, dass** die Wärmetauscheinrichtung (9,10) als Verdampfer ausgebildet ist und im Wasser-/Dampfkreislauf (15) der Großkesselanlage (1) parallel zum Verdampfer (13) der Großkesselanlage (1) angeordnet ist.

7. Anlage nach einem der vorgenannten Ansprüche, **dadurch gekennzeichnet, dass** die Wärmetauscheinrichtung als eine die Brennkammer (7) teilweise umfassende Rohrwand-Heizfläche (9) ausgebildet ist.

8. Anlage nach einem der Ansprüche 1 bis 6, **dadurch gekennzeichnet, dass** die Wärmetauscheinrichtung mindestens eine Konvektiv-Heizfläche (Schott-Heizfläche) (10) umfasst.

9. Anlage nach einem der vorgenannten Ansprüche, **dadurch gekennzeichnet, dass** der Verbindungskanal (4) in die Brennkammer (2) der Großkesselanlage (1) eingebunden ist.

10. Anlage nach einem der Ansprüche 1 bis 8, **dadurch gekennzeichnet, dass** der Verbindungskanal (4) in den Trichterbereich der Brennkammer (2) der Großkesselanlage (1) eingebunden ist.

11. Anlage nach einem der vorgenannten Ansprüche, **dadurch gekennzeichnet, dass** der Verbindungskanal (4) mit einem Zyklonabscheider (14) ausgebildet ist.

12. Anlage nach einem der vorgenannten Ansprüche, **dadurch gekennzeichnet, dass** der Feststoffaustritt (27) des Zyklonabscheiders (14) durch eine Leitung mit der Brennkammer (7) verbunden ist.

## Claims

1. System for the combustion of fossil fuels and biological agents or waste, comprising
a large-scale boiler plant (1) of a power station operated with a steam turbine with installations for the combustion of fossil fuels,
at least one additional combustion device (3) arranged upstream of the large-scale boiler plant (1) for the combustion of biological agents or waste,
at least one connecting duct (4), which connects the combustion chamber (7) of the additional combustion device (3) with the combustion chamber (2) of the large-scale boiler plant (1)
and at least one heat exchanger system (9, 10) arranged in the additional combustion device (3), the heat exchanger system (9, 10) being integrated into the water/steam cycle (15) of the large-scale boiler plant (1),
**characterised in that** the additional combustion device (3) is designed with a grate firing (8), which is equipped with a mechanically moving grate, namely a pusher-type grate, a reverse acting grate, a travelling grate, a roller-type grate or the like.

2. System according to claim 1, **characterised in that** the heat exchanger system (9,10) is designed as feed heater or as additional feed heater in the water/steam cycle (15) of the large-scale boiler plant (1).

3. System according to claim 1 or 2, **characterised in that** the heat exchanger system (9,10) is arranged upstream of a feed heater (11) integrated into the water/steam cycle (15) of the large-scale boiler plant (1).

4. System according to claim 1 or 2, **characterised in that** the heat exchanger system (9,10) is arranged downstream of a an economiser (11) integrated into the water/steam cycle (15) of the large-scale boiler plant (1).

5. System according to one of the above-mentioned claims, **characterised in that** the water/steam cycle (15) is designed with a bypass pipe (12) bypassing the heat exchanger system (9,10).

6. System according to claim 1, **characterised in that** the heat exchanger system (9,10) is designed as evaporator and arranged in the water/steam cycle (15) of the large-scale boiler plant (1) parallel to the evaporator (13) of the large-scale boiler plant (1).

7. System according to one of the above-mentioned claims, **characterised in that** the heat exchanger system is designed as a tubular wall heating surface (9) partially enclosing the combustion chamber (7).

8. System according to one of the claims 1 to 6, **characterised in that** the heat exchanger system comprises at least a convective heating surface (platen heating surface) (10).

9. System according to one of the above-mentioned claims, **characterised in that** the connecting duct (4) is integrated into the combustion chamber (2) of the large-scale boiler plant (1).

10. System according to one of the claims 1 to 8, **characterised in that** the connecting duct (4) is integrated into the hopper area of the combustion chamber (2) of the large-scale boiler plant (1).

11. System according to one of the above-mentioned claims, **characterised in that** the connecting duct (4) is designed with a cyclone separator (14).

12. System according to one of the above-mentioned claims, **characterised in that** the solids outlet (27) of the cyclone separator (14) is connected with the combustion chamber (7) by a pipe.

## Revendications

1. Dispositif pour la combustion des combustibles fossiles et des agents biologiques ou des déchets, comprenant
une installation de chaudière de grande puissance (1) d'une centrale électrique opérée par une turbine à vapeur avec des installations pour la combustion des combustibles fossiles,
au moins une installation de combustion supplémentaire (3) en amont de l'installation de chaudière de grande puissance (1) pour la combustion des agents biologiques ou des déchets,
au moins un conduit de connexion (4), qui relie la chambre de combustion (7) de l'installation de combustion supplémentaire (3) avec la chambre de combustion (2) de l'installation de chaudière de grande puissance (1)
et au moins un dispositif d'échangeur de chaleur (9,10) disposé dans l'installation de combustion supplémentaire (3), le dispositif d'échangeur de chaleur (9,10) étant intégré dans le circuit eau-vapeur (15) de l'installation de chaudière de grande puissance (1),
**caractérisé en ce que** l'installation de combustion supplémentaire (3) est désignée avec une grille de combustion (8) équipée d'une grille mouvant mécaniquement, c'est-à-dire une grille à avance, une grille à recul, une grille à chaîne sans fin, une grille à tambour ou semblable.

2. Dispositif selon revendication 1, **caractérisé en ce que** le dispositif d'échangeur de chaleur (9,10) est désigné comme réchauffeur d'eau d'alimentation ou comme réchauffeur d'eau d'alimentation supplémentaire dans le circuit eau-vapeur (15) de l'installation de chaudière de grande puissance (1).

3. Dispositif selon revendication 1 ou 2, **caractérisé en ce que** le dispositif d'échangeur de chaleur (9,10) est disposé en amont d'un réchauffeur d'eau d'alimentation (11) intégré dans le circuit eau-vapeur (15) de l'installation de chaudière de grande puissance (1).

4. Dispositif selon revendication 1 ou 2, **caractérisé en ce que** le dispositif d'échangeur de chaleur (9,10) est disposé en aval d'un réchauffeur d'eau d'alimentation (11) intégré dans le circuit eau-vapeur (15) de l'installation de chaudière de grande puissance (1).

5. Dispositif selon une des revendications sus-mentionnées, **caractérisé en ce que** le circuit eau-vapeur (15) est désigné avec une ligne de by-pass (12) contournant l'installation d'échangeur de chaleur (9,10).

6. Dispositif selon revendication 1, **caractérisé en ce que** l'installation d'échangeur de chaleur (9,10) est désignée comme évaporateur et disposée dans le circuit eau-vapeur (15) de l'installation de chaudière de grande puissance (1) parallèlement à l'évaporateur (13) de l'installation de chaudière de grande puissance (1).

7. Dispositif selon une des revendications sus-mentionnées, **caractérisé en ce que** l'installation d'échangeur de chaleur est désignée comme une surface chauffée de la paroi tubulaire (9) partiellement entourant la chambre de combustion (7).

8. Dispositif selon une des revendications 1 à 6, **caractérisé en ce que** l'installation d'échangeur de chaleur comprend au moins une surface de chauffe convective (surface de Platen) (10).

9. Dispositif selon une des revendications sus-mentionnées, **caractérisé en ce que** le conduit de connexion (4) est intégré dans la chambre de combustion (2) de l'installation de chaudière de grande puissance (1).

10. Dispositif selon une des revendications 1 à 8, **caractérisé en ce que** le conduit de connexion (4) est intégré dans la trémie de la chambre de combustion (2) de l'installation de chaudière de grande puissance (1).

11. Dispositif selon une des revendications sus-mentionnées, **caractérisé en ce que** le conduit de connexion (4) est désigné avec un séparateur à cyclone (14).

12. Dispositif selon une des revendications sus-mentionnées, **caractérisé en ce que** la sortie de substances solides (27) du séparateur à cyclone (14) est connectée avec la chambre de combustion (7) par un conduit.
